# EUROPEAN PATENT APPLICATION

(11) **EP 1 209 443 A1**
(43) Date of publication of application: **29.05.2002**
(21) Application number: 01115577.7
(22) Date of filing: 28.06.2001
(51) Int. Cl.: G01B 11/30, G01N 21/47

(54) **Method and apparatus for direct image pick-up of granular speck patterns**

(30) Priority: 27.11.2000 JP 2000403553
(71) Applicant: KABUSHIKI KAISHA TOYOSEIKISEISAKUSHO, Tokyo-to (JP)
(72) Inventor: Hiroyuki, Konno, Odawara-shi, Kanagawa-ken (JP)
(74) Representative: Zipse + Habersack

(57) **Abstract**

The invention relates to a method for direct image pick-up of a particular granular speck pattern generated by reflecting light of laser beam depending on a degree of roughness of the laser beam irradiated surface of an object to be inspected, said method comprising steps of:
irradiating said object to be inspected with the laser beam; and
directly picking up said granular speck pattern in a relatively well-lighted environment like an ordinary office using a commercially available video camera deprived of its image forming lens and provided in front of a CCD (Charge Coupled Device) element incorporated in said video camera with a shielding tube adapted to shield extraneous light rays and a corresponding apparatus.

## Description

### BACKGROUND OF THE INVENTION

### Field of the Invention

The present invention relates to a method and an apparatus for direct image pick-up of a granular speck pattern generated by reflecting and/or transmitted light of laser with which an opaque, translucent or transparent object to be inspected is irradiated.

The present invention is based on the fact that the reflected and/or transmitted light in such granular speck pattern is generated as the object to be inspected is irradiated with laser beam. This phenomenon will be discussed with respect to the case of the reflected light in the granular speck pattern. The granular speck pattern appears over an entire reflection surface as the object to be inspected is irradiated with monochromatic laser beam of high directivity, luminance and linearity. The granular speck pattern has the maximum within an angle of reflection at an incidence spot of said laser beam and gradually decreasing toward the peripheral edge. In the case of the transmitted light also, such granular speck pattern appears over the entire transmission surface.

This granular speck pattern depends on a degree of roughness on the surface of the object to be inspected or shapes of fine ingredients forming the object to be inspected. The granular speck pattern as the object to be inspected moves and the same pattern is reproduced so far as no change occurs in the spot on the object to be inspected at which said object is irradiated with the laser beam, the wavelength of the laser beam and the beam diameter. The granular specks have their sizes reduced or magnified depending on a particular pattern of the object to be inspected at the particular laser irradiated spot thereon and the granular specks have their sizes magnified or reduced as the diameter of the laser beam is reduced or enlarged as the object to be inspected moves back or forth.

The granular speck pattern is generated depending on a roughness of the surface of the object to be inspected. This granular speck pattern can be picked up not only when the object is made of metal, rubber, wood etc., but also when the object is a mirror surface finished IC wafer or glass having a high transparency both of which present the highest smoothness.

In this manner, the granular speck pattern may be picked up as an index to observe changes of various conditions, for example, a quantity of movement, displacement, deformation, coagulation, melting or progress of rust in a noncontact fashion without demand for any specified index or mark.

### Description of the Related Art

Usually a darkroom has been used as the measurement environment to pick up the granular speck pattern and reflecting light or transmitted light of the laser beam has been projected on a screen made of frosted glass. A pattern projected on the screen has then indirectly picked up by a digital or video camera.

So-called cross correlation method is also well known in which the object is irradiated with laser beam oriented vertically to the object and there are provided a pair of unidimensional sensors at an angle of 45 ° about the normal line, respectively, and a difference between photoelectric outputs of these unidimensional sensors is used to measure a distortion. However, direct observation of such distortion in the form of an image is impossible and any effective measurement is impossible for this method for the object moving back and forth.

Said indirect image pick-up method has usually been carried out in a darkroom According to said cross correlation method, the variation in light intensity has been directly converted to the corresponding variation in voltage and therefore it has been impossible to visually recognize the image picked up. In addition, this cross correlation method is not effective at all for the object moving back and forth since the irradiation laser beam can not focussed into a single spot.

### SUMMARY OF THE INVENTION

The present invention aims to eliminate the above described restrictions as well as many requirements imposed on the prior art due to the designing technique as well as the measuring environment. To meet this, the present invention aims to simplify respective means in the method and apparatus for measurement, on one hand, and to alleviate restrictions imposed on the object to be inspected, on the other hand.

The object set for above is achieved, according to a first aspect of the present invention, by method and apparatus allowing said direct image pick-up using the commercially available digital or video camera merely by depriving the camera of its image forming lens.

The object set forth above is achieved, according to a second aspect of the present invention, by method and apparatus allowing said direct image pick-up in a well-lighted environment like an ordinary office merely by providing in front of the CCD element with a shielding tube (e.g., the shielding tube having a circular cross-section) adapted to shield extraneous light rays such as illuminating right coming from indoor luminaires or sunlight coming through windows.

### Operation

The present invention generally comprises five features.

A first feature is to irradiate an object to be inspected with laser beam.

A second feature is to pick up a granular speck pattern in a direct manner.

A third element is to carry out the image pick-up in a well-lighted environment like an ordinary office.

A fourth feature is to quantitatively correlate movement, shift, deformation, coagulating rate or melting rate of the object or progress of rusting on the object with movement of the picked up granular speck pattern and thereby to use this quantitative correlation for a specific machine or apparatus.

A fifth feature is to quantitatively calculate movement, shift or deformation of the picked up granular speck pattern on the basis of a pixel interval of the CCD element or to compare the immediately previous image of picked up granular speck pattern with the immediately subsequent image of picked up granular speck pattern to calculate a coagulating rate, a melting rate or progress of rusting so that the result of calculation may be displayed depending on the particular purpose of every machine or apparatus.

These features will be summarized in combination with one another. The object to be inspected is irradiated with the laser beam to generate the granular speck pattern depending on a degree of roughness of said object to be inspected or shapes of fine ingredients constituting said object to be inspected. In this way, the image of the granular speck pattern depending on movement, shift or deformation is continuously picked up a center of gravity of a speck selected as a reference point in the granular speck pattern is tracked in a time series fashion so that a quantity of movement is real time calculated on the basis of the pixel interval or the memory address real time displayed.

If a quantity of the object to be inspected is relative large, immediately before said center of gravity of the selected granular speck as the reference point departs from the view field of the CCD element, a center of gravity of another granular speck still lying within said view field may be selected as a new reference point. Such renewal of the reference point may be repeated to achieve a continuous measurement.

As for the back and forth movement of the object to be inspected, the granular speck pattern has its entire area proportionally reduced as the object to be inspected gets nearer to the CCD element while the granular speck pattern has its entire area proportionally enlarged. On the basis of this area ratio, a quantity of the back and forth movement of the object to be inspected is calculated and displayed.

A quantity of the back and forth may be also calculated by selecting two granular specks from the granular speck pattern and by determining a variation in a distance in straight line between respective centers of gravity of these two granular specks.

The coagulating rate, melting rate or progress of rusting can be determined by compare the immediately previous image with immediately subsequent image of the continuously picked up granular speck patterns on the basis of a degree of coincidence between these two images.

### BRIEF DESCRIPTION OF THE DRAWINGS

Fig. 1 is a diagram illustrating a method for direct image pick-up of a granular speck pattern generated by laser beam reflected on an opaque object to be inspected; and
Fig. 2 is a diagram similar to Fig. 1 but illustrating a granular speck pattern generated by laser beam reflected on a transparent or translucent object to be inspected.

### DETAILED DESCRIPTION OF THE PREFERRED EMBODIMENTS

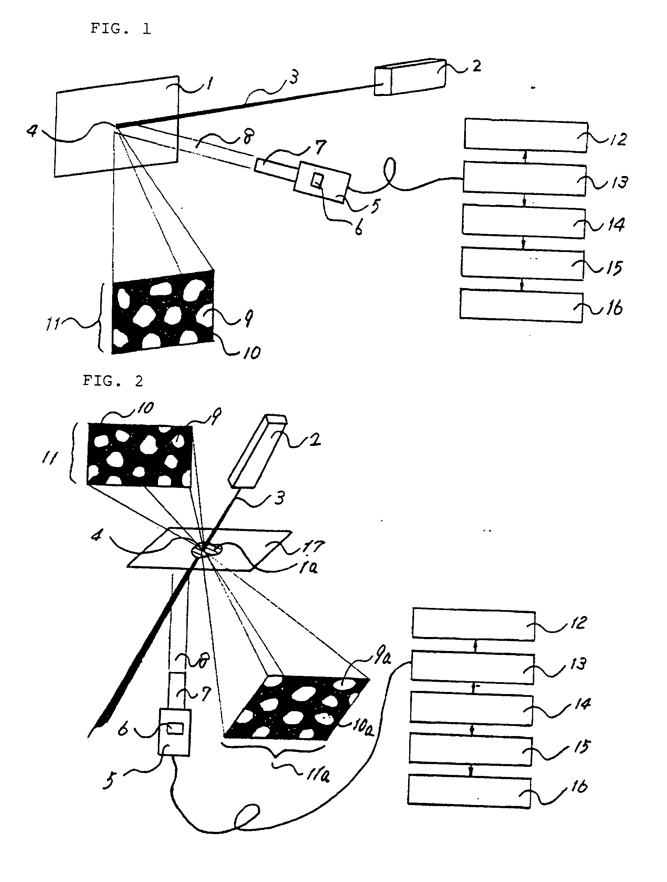

Before a preferred embodiment of this invention is described in reference with Figs. 1 and 2 of the accompanying drawings, details of an object to be inspected and of respective components' types as well as functions will be described.

Respective reference numerals designate elements as following: 1a.....blood; 2.....laser projector; 3.....laser beam; 4.....laser beam irradiated spot; 5 image pick-up device; 6.....CCD element; 7.....shielding tube adapted to shield extraneous light around granular speck pattern; 8.....view field of CCD element; 9.....granular speck pattern generated by reflected light; 9a.....granular speck pattern generated by transmitted light; 10..... frosted glass on which transmitted light is projected within darkroom according to conventional method for indirect image pick-up; 10a.....frosted glass on which transmitted light is projected within darkroom according to conventional method for indirect image pick-up; 11.....granular speck pattern generated by reflected light; 11a.....granular speck pattern generated by transmitted light; 12.....monitoring device for display of picked up granular speck pattern; 13.....video signal brancher for picked up video signal in granular speck pattern imaged granular speck pattern; 14.....A/D (Analog/Digital) converter adapted to digitalize video signal in the form of analog signal before input to computer; 15.....processing unit adapted to, depending on particular purpose of application, calculate quantity of movement, deformation or displacement of granular specks or granular speck pattern and thereby to calculate coagulating or melting rate on the basis of coinciding degree between immediately previous image and immediately subsequent image; 16.....display device adapted to display various quantities or rates calculated by processing unit in the form of numerical value or graphic chart; and 17.....slide glass used for process based on transmitted light.

Fig. 1 is a diagram illustrating method and apparatus according to Claims 1 and 2, respectively, for direct image pick-up of a granular speck pattern generated by laser beam reflected on an opaque object to be measure.

An object 1 to be inspected is irradiated with laser beam 3 from a laser projector 2. In the case of sheet copper as an example of the object 1, a granular speck pattern 11 is generated on entire surface of the object 1 as said object 1 is irradiated at a target spot 4 thereon with the laser beam 3. It should be understood that such granular speck pattern 11 can not be visually recognized directly.

When the measurement is carried out in a darkroom, the granular speck pattern 11 is projected on a frosted glass plate 10 placed on an optical path as seen in Fig. 1. Conventionally, the granular speck pattern 11 projected in this manner has been picked up using digital or video camera.

According to the present invention, an image pick-up device 5 corresponding to said digital or video camera deprived of its image forming lens is incorporated with a CCD element 6. Said image pick-up device 5 is provided on its front side, i.e., in front of said CCD element 6, with a shielding tube 7 serving to shield any extraneous light due to an indoor illuminating light. The shielding tube 7 is slightly larger than the CCD element 6, more specifically, has a length of several centimeters and a circular or square cross-section. This arrangement enables the granular speck pattern 11 to be directly picked up. A scope of the image picked up by the CCD element 6 is defined by a view field 8.

A video signal based on the picked up image is branched in two by a video signal brancher 13, one of which is input to a monitor device 12 which then displays a particular image of the granular speck pattern 11 given by said one of the branched signals.

The other of said branched video signals is input to an A/D converter 14 in the form of an analog signal and converted by said A/D converter 14 to the corresponding digital signal to be input to a processing unit 15. The unit 15 carries out a desired processing and a result of this processing is input to a display device 16 which displays said result in the form of a numerical value or graphic chart.

More specifically, the granular speck pattern 11 moves in parallel to the object to be measure as said object 1 moves. In view of this, the quantity of movement is calculated on the basis of a pixel interval in the CCD element 6 and not only quantity but also a speed as well as a direction of movement are displayed.

As for coating or adhesive, each pair of immediately previous and immediate subsequent images in the continuously picked up granular speck patterns are successively compared to each other to calculate a coinciding degree so that drying rate or hardening rate obtained on the basis of said coinciding degree may be displayed. After coating has been dried or adhesive has been hardened, the picked up image remains identical with the coinciding degree of 100 %.

In the case of thermally meltable solder, the picked up image remains constant with a coinciding percentage of 100 % before heated and the coinciding percentage gradually decreases down to 0 % as the solder begins to be heated until the solder is liquidized. This is true for progress of rusting.

An average area of the granular speck pattern 11 and an area of the individual granular speck 9 are proportionally enlarged as the object to be inspected recedes from the image pick-up device 5 and proportionally reduced as said object gets nearer to said image pick-up device 5. Such phenomenon may be utilized to determine a distance from the image pick-up device 5 to the object to be inspected.

Fig. 2 is a diagram illustrating a method for direct pick up of the granular speck pattern generated by transmitted light of the laser beam when the object to be inspected according to Claim 4 used to execute the method according to Claim 3 is transparent or translucent.

An object 1 to be inspected is irradiated with laser beam 3 from a laser projector 2. It is assumed here that blood as an object 1a to be inspected has been dropped on slide glass 17. Irradiation of the object 1a at the spot 4 with the laser beam 3 causes a granular speck pattern 11 and a granular speck pattern 11a to be generated by reflected light and transmitted light, respectively, of the laser beam 3 on entire surface of the object 11a. It should be understood that these granular speck patterns 11, 11a can not be visually recognized by an operator.

When the measurement is carried out in a darkroom, the granular speck pattern 11 and the granular speck pattern 11a are projected on frosted glass plates 10, 10a, respectively, as seen in Fig. 2. Conventionally, the granular speck patterns 11, 11a projected in this manner have been picked up.

According to the present invention, an image pick-up device 5 corresponding to said digital or video camera deprived of its image forming lens is incorporated with a CCD element 6. Said image pick-up device 5 is provided on its front side, i.e., in front of said CCD element 6, with a shielding tube 7 serving to shield any extraneous light due to an indoor illuminating light. The shielding tube 7 is slightly larger than the CCD element 6, more specifically, has a length of several centimeters and a circular or square cross-section. This arrangement enables the granular speck pattern 11 to be directly picked up. A scope of the image picked up by the CCD element 6 is defined by a view field 8.

A video signal based on the picked up image is branched in two by a video signal brancher 13, one of which is input to a monitor device 12 which then displays a particular image of the granular speck pattern 11 given by said one of the branched signals.

The other of said branched video signals is input to an A/D converter 14 in the form of an analog signal and converted by said A/D converter 14 to the corresponding digital signal to be input to a processing unit 15. The unit 15 carries out a desired processing and a result of this processing is input to a display device 16 which displays said result in the form of a numerical value or graphic chart.

When the method according to the invention relies upon the transmitted light of laser beam, the granular speck pattern 11 generated by the reflecting light of laser beam presents the same nature as that of the granular speck pattern 11 obtained when the method relies upon the reflecting light of laser beam as illustrated by Fig. 1.

For the blood sample 1a to be inspected by the method relying on the transmitted light, the laser beam is diffusively reflected on erythrocytes to generate the granular speck pattern 11a since the beam from the laser beam projector 2 has a wavelength in the order of 700 nm. In other words, this granular speck pattern 11a is based on movement of the erythrocytes in the blood sample.

The granular speck pattern 11 generated by the reflecting light depends on a surface condition of the blood sample 1a while the granular speck pattern 11a generated by the transmitted light depends on an interior condition of the blood sample 1a.

To determine, for example, a blood coagulation time, the surface of the blood sample dropped on the slide glass 17 is irradiated with the laser beam 3 to obtain the granular speck pattern 11 generated by the reflecting light and the granular speck pattern 11a generated by the transmitted light.

The granular speck pattern 11a generated by the transmitted light is remarkably unstable at the beginning but gradually stabilized as the blood coagulation progresses until the pattern 11a is completely stabilized, suggesting completion of the blood coagulation. In this way, the blood coagulation time can be determined in noncontact fashion. Similarly, hardening or drying in translucent adhesive or coating can be observed.

### Effect of the Invention

As will be apparent from the foregoing description, the method according to the invention enables the granular speck pattern to be directly picked up using the digital or video camera deprived of its image forming lens. By providing said camera in front of the CCD element incorporated therein with the shielding tube adapted to shield any extraneous light rays, the direct image pick-up can be easily achieved even in a well-lighted environment like the ordinary office. In this manner, movement, deformation, shift of the object to be inspected as well as coagulation, melting or progress of rusting in the object such as a sample of adhesive, metal or blood can be easily and quantitatively determined.

### [IDENTIFICATION OF REFERENCE NUMERALS USED IN THE DRAWINGS]

- [1]: object to be inspected (e.g., copper sheet)
- [1a]: object to be inspected (e.g., blood)
- [2]: laser projector
- [3]: laser beam
- [4]: laser irradiated position
- [5]: image pick-up device
- [6]: CCD element
- [7]: shielding tube
- [8]: range of visual field
- [9]: granular speck pattern (reflected light)
- [9a]: granular speck pattern (transmitted light)
- [10]: frosted glass (reflected light)
- [10a]: frosted glass (transmitted light)

## Claims

1. Method for direct image pick-up of a particular granular speck pattern generated by reflecting light of laser beam depending on a degree of roughness of the laser beam irradiated surface of an object to be inspected, said method comprising steps of:
irradiating said object to be inspected with the laser beam; and
directly picking up said granular speck pattern in a relatively well-lighted environment like an ordinary office using a commercially available video camera deprived of its image forming lens and provided in front of a CCD (Charge Coupled Device) element incorporated in said video camera with a shielding tube adapted to shield extraneous light rays.

2. Apparatus for direct image pick-up of a particular granular speck pattern generated by reflecting light of laser beam depending on a degree of roughness of the laser beam irradiated surface of an object to be inspected, said apparatus comprising a commercially available video camera deprived of its image forming lens and provided in front of a CCD element incorporated in said video camera with a shielding tube adapted to shield extraneous light rays.

3. Method for direct image pick-up of a particular granular speck pattern generated by transmitted light of laser beam diffusively reflecting depending on a degree of roughness of the laser beam irradiated surface of an object to be inspected or shapes of fine ingredients constituting said object to be inspected, said method comprising steps of:
irradiating said object to be inspected with the laser beam; and
directly picking up said granular speck pattern in a relatively well-lighted environment like an ordinary office using a commercially available video camera deprived of its image forming lens and provided in front of a CCD element incorporated in said video camera with a shielding tube adapted to shield extraneous light rays.

4. Apparatus for direct image pick-up of a particular granular speck pattern generated by transmitted light of laser beam diffusively reflecting depending on a degree of roughness of the laser beam irradiated surface of an object to be inspected or on shapes of fine ingredients constituting said object to be inspected, said apparatus comprising a commercially available video camera deprived of its image forming lens and provided in front of a CCD element incorporated in said video camera with a shielding tube adapted to shield extraneous light rays.
